# FASCICULE DE BREVET EUROPEEN

(11) **EP 3 542 207 B1**
(45) Date de publication et mention de la délivrance du brevet: **21.04.2021**
(21) Numéro de dépôt: 17811204.1
(22) Date de dépôt: 15.11.2017
(51) Int. Cl.: G02B 27/01

(54) **AFFICHEUR TÊTE-HAUTE POUR VÉHICULE AUTOMOBILE**
HEAD-UP-ANZEIGE FÜR EIN KRAFTFAHRZEUG
HEAD-UP DISPLAY FOR A MOTOR VEHICLE

(30) Priorité: 16.11.2016 FR 1661111
(43) Date de publication de la demande: 25.09.2019
(73) Titulaire: Valeo Comfort and Driving Assistance, 94046 Créteil Cedex (FR)
(72) Inventeur: MERMILLOD, Pierre, 94046 Créteil Cedex (FR); HUSSON, Arnaud, 94046 Créteil Cedex (FR); GRANDCLERC, François, 94046 Créteil Cedex (FR)
(74) Mandataire: Delplanque, Arnaud
(86) Numéro de dépôt international: PCT/EP2017/079299
(87) Numéro de publication internationale: WO 2018/091518

(56) Documents cités:
- WO-A1-2012/175609
- WO-A1-2016/096079
- DE-A1-102008 008 878
- JP-A- 2005 289 098
- JP-A- 2006 011 168
- JP-A- 2006 082 593

## Description

### DOMAINE TECHNIQUE AUQUEL SE RAPPORTE L'INVENTION

La présente invention concerne de manière générale les dispositifs d'aide à la conduite de véhicules automobiles.

Elle concerne plus particulièrement un afficheur tête-haute pour véhicule automobile, qui comporte :
- un boîtier,
- un dispositif de génération d'images logé à l'intérieur du boîtier, et
- un système de projection adapté à dévier le faisceau lumineux émis par le dispositif de génération d'images pour projeter lesdites images dans le champ de vision du conducteur du véhicule automobile.

### ARRIERE-PLAN TECHNOLOGIQUE

Pour faciliter et rendre plus sûre la conduite d'un véhicule automobile, on souhaite éviter que le conducteur ne soit forcé de détourner son regard de la route qu'il emprunte.

Pour cela, il est connu d'utiliser un afficheur tête-haute, adapté à projeter des informations élémentaires (vitesse du véhicule, direction à suivre, ...) à la hauteur du regard du conducteur.

On connaît notamment deux types d'afficheurs tête-haute.

Les afficheurs du premier type utilisent un dispositif de formation d'image comprenant un diffuseur et une unité de balayage conçue pour générer un faisceau lumineux balayant une face d'entrée du diffuseur. Le faisceau lumineux en sortie du diffuseur forme ainsi une image, qui peut alors être projetée dans le champ de vision du conducteur du véhicule.

Les afficheurs du second type utilisent un dispositif de formation d'image comprenant un écran qui permet de générer une image, laquelle peut être projetée dans le champ de vision du conducteur.

Chacun de ces afficheurs tête-haute comprend un boîtier qui loge le dispositif de génération d'images ainsi qu'un ou plusieurs miroirs. Ce boîtier est conçu pour être rapporté dans l'habitacle du véhicule, plus précisément dans la planche de bord du véhicule, c'est-à-dire sous le pare-brise.

Pour permettre le passage de la lumière depuis le dispositif de génération d'images vers l'extérieur du boîtier (dans le champ de vision du conducteur), le boîtier présente une fenêtre principale.

Pour éviter la chute d'objets dans le boîtier ou l'entrée de particules de poussière à l'intérieur du boîtier, ce qui risquerait de détériorer l'un des composants de l'afficheur, cette fenêtre principale est généralement fermée par une vitre de protection.

L'inconvénient majeur de cette vitre de protection est qu'elle est susceptible de réfléchir la lumière intérieure (produite par le système lui même) ou extérieure, notamment la lumière du soleil, ainsi que de réfracter cette lumière à l'intérieur du boîtier. Il peut alors arriver que cette lumière perturbe la lisibilité des informations projetées par l'afficheur tête-haute, voire gêne la conduite du véhicule.

Les documents JP 2005 289098 A, JP 2006 011168 A, WO 2012/175609 A1 et JP 2006 082593 A divulguent des afficheurs tête-haute connus.

### OBJET DE L'INVENTION

Afin de remédier à l'inconvénient précité de l'état de la technique, on propose selon l'invention un afficheur tête-haute tel que défini dans la revendication 1.

Ainsi, grâce à l'actionneur, il est possible de dévier les rayons lumineux qui se réfléchissent sur l'écran anti-lumière parasite de telle manière qu'ils ne provoquent aucune gêne pour le conducteur. Il est plus précisément possible de dévier ces rayons lumineux dans une direction éloignée du visage du conducteur ou de les diffuser dans une multitude de directions de façon à atténuer leurs intensités.

D'autres caractéristiques avantageuses et non limitatives de l'afficheur tête-haute conforme à l'invention sont les suivantes :
- l'écran anti-lumière parasite ferme entièrement ladite fenêtre pratiquée dans le boîtier ;
- il est prévu un capteur pour acquérir une donnée relative à la position du soleil par rapport au véhicule automobile, et ledit actionneur est piloté par un calculateur en fonction de la donnée acquise ;
- il est prévu un capteur pour acquérir une donnée relative au taux de diffusion de la lumière du soleil perçue depuis le véhicule automobile, et ledit actionneur est piloté par un calculateur en fonction de la donnée acquise ;
- l'écran anti-lumière parasite est mobile en basculement par rapport au boîtier ;
- il est prévu des butées pour limiter la mobilité de l'écran anti-lumière parasite entre deux positions extrêmes qui sont inclinées l'une par rapport à l'autre d'un angle inférieur à 30 degrés, préférentiellement égal à 20 degrés ;
- l'écran anti-lumière parasite est adapté à se déformer en flexion entre une configuration plane et une configuration courbée extrême ;
- en configuration courbée extrême, l'écran anti-lumière parasite présente un rayon de courbure inférieur à 20 millimètres, préférentiellement égal à 14 millimètres ;
- le système de projection comprend au moins un miroir de repliement adapté à dévier le faisceau lumineux émis par le dispositif de génération d'images et ledit écran anti-lumière parasite est situé le long du chemin dudit faisceau lumineux entre, d'un côté, le dispositif de génération d'images, et, de l'autre, chaque miroir de repliement ;
- le boîtier présente une fenêtre principale pour le passage dudit faisceau lumineux vers l'extérieur du boîtier, et il est prévu dans la fenêtre principale ou entre la fenêtre principale et ledit écran anti-lumière parasite un filtre polariseur fixe et/ou une vitre de protection fixe ; et
- le boîtier présente une fenêtre principale pour le passage dudit faisceau lumineux vers l'extérieur du boîtier qui est ouverte, et ledit écran anti-lumière parasite assure une fonction de protection du dispositif de génération d'images contre les objets entrant dans le boîtier par la fenêtre principale.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un premier mode de réalisation d'un afficheur tête-haute conforme à l'invention ;
- la figure 2 est une vue schématique d'un second mode de réalisation d'un afficheur tête-haute conforme à l'invention ; et
- la figure 3 est une vue schématique d'un capteur équipant les afficheurs tête-haute des figures 1 et 2.

En préliminaire on notera que les éléments identiques ou similaires des différents modes de réalisation de l'invention représentés sur les différentes figures seront, dans la mesure du possible, référencés par les mêmes signes de référence et ne seront pas décrits à chaque fois.

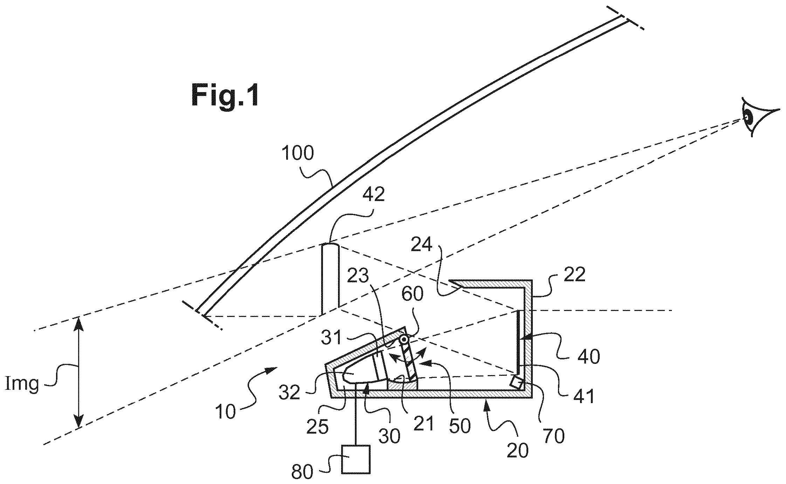

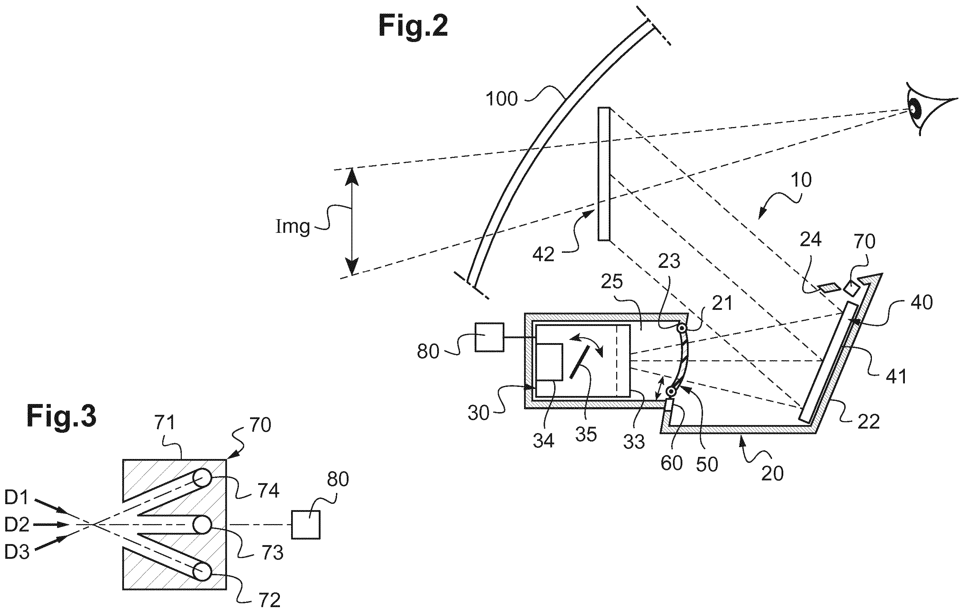

Sur les figures 1 et 2, on a représenté deux modes de réalisation d'un afficheur tête-haute 10 destiné à équiper un véhicule automobile.

Dans ces deux modes de réalisation, l'afficheur tête-haute 10 comprend un boîtier 20 qui loge, d'une part, un dispositif de génération d'images 30 piloté par un calculateur 80, et, d'autre part, une partie au moins d'un système optique de projection 40.

A titre préliminaire, on pourra noter que le calculateur 80 pourra faire partie de l'afficheur tête-haute et être logé dans le boîtier 20. En variante, il pourra plutôt s'agir d'un calculateur extérieur à l'afficheur tête-haute, par exemple de l'un des calculateurs du véhicule automobile. Dans cette variante, l'afficheur tête-haute comportera alors des moyens de connexion à ce calculateur.

Dans le premier mode de réalisation illustré sur la figure 1, le dispositif de génération d'images 30 est du type « à modulation de lumière ». Il comprend un écran d'affichage 31, ici un écran à cristaux liquides (ou LCD pour *"Liquid Crystal Display*") à transistors en couche mince (ou TFT pour "*Thin-Film Transistor*"), qui est piloté par le calculateur 80. Il comprend également un dispositif d'éclairage 32, qui est ici situé à l'arrière de l'écran d'affichage 31 pour, le rétroéclairer. Ce dispositif d'éclairage 32 comporte une pluralité de diodes électroluminescentes réparties derrière les cristaux liquides de l'écran d'affichage 31.

Dans le second mode de réalisation illustré sur la figure 2, le dispositif de génération d'images 30 est du type « émissif ». Il comprend un diffuseur 33 et une unité de balayage qui est pilotée par le calculateur 80 de façon à générer un faisceau lumineux de direction variable balayant la face arrière du diffuseur 33. L'unité de balayage comprend plus précisément un module de formation de faisceau 34 et au moins un miroir mobile 35, par exemple réalisé sous forme d'un microsystème électromécanique (ou MEMS pour "*MicroElectroMechanical System*")*.* Le module de formation de faisceau 34 comprend typiquement trois sources de lumière monochromatiques, telles que des sources laser, dont les faisceaux lumineux respectifs (monochromatiques) sont combinés (par exemple à l'aide de miroirs dichroïques) afin de former un faisceau lumineux polychromatique (ici laser) émis en sortie du module de formation de faisceau 34. Ce faisceau lumineux généré par le module de formation de faisceau 34 est dirigé vers le miroir mobile 35, dont l'orientation est commandée de façon à ce que le faisceau lumineux réfléchi (par le miroir mobile 35) balaie la face arrière du diffuseur 33.

Dans ces deux modes de réalisation, le dispositif de génération d'images 30 peut être équipé, à l'avant de l'écran d'affichage 31 ou du diffuseur 33, d'une vitre protectrice collée à cet écran d'affichage 31 ou à ce diffuseur 33.

Quoiqu'il en soit, ce dispositif de génération d'images 30 permet, sous le contrôle du calculateur 80, de générer une image que le système optique de projection 40 va pouvoir projeter dans le champ de vision du conducteur lorsque le regard de ce dernier est tourné vers la route.

Dans les deux modes de réalisation représentés sur les figures 1 et 2, le système optique de projection 40 est conçu pour projeter une image virtuelle Img dans le champ de vision du conducteur du véhicule, à une distance du conducteur qui est supérieure à celle séparant le conducteur du pare-brise 100 (si bien que les yeux du conducteur n'ont pas à effectuer de travail d'accommodation pour percevoir de manière nette les informations projetées).

Le système optique de projection 40 comporte à cet effet ici un miroir de repliement 41 situé sur le chemin du flux lumineux émis par le dispositif de génération d'images 30. Il comporte également ici un combineur 42 placé dans le champ de vision du conducteur du véhicule.

Le miroir de repliement 41 permet de renvoyer l'image générée par le dispositif de génération d'images 30 vers le combineur 42. Il est ici plat mais il pourrait présenter une forme différente, par exemple asphérique.

Le combineur 42 permet de réfléchir cette image de telle manière qu'elle apparaisse au conducteur comme si elle était affichée à une grande distance de ce dernier.

Ici, ce combineur 42 est formé par une lame partiellement réfléchissante qui est disposée dans l'habitacle du véhicule automobile, entre le pare-brise 100 du véhicule et les yeux du conducteur, et qui est incurvée de manière à agrandir la taille de l'image virtuelle Img vue par le conducteur.

En variante, le combineur pourrait être formé par le pare-brise lui-même.

Dans les deux modes de réalisation représentés sur les figures 1 et 2, le boîtier 20 est conçu pour loger le miroir de repliement 41 et le dispositif de génération d'images 30.

Il comporte à cet effet des parois externes 22 qui délimitent entre elles un espace intérieur permettant de loger ces composants 30, 41.

Il comporte également des moyens d'assujettissement de ces composants et des moyens de fixation du boîtier 20 au véhicule automobile.

Les moyens d'assujettissement (non représentés) permettent de fixer rigidement le miroir de repliement 41 et le dispositif de génération d'images 30 dans l'espace intérieur délimité par les parois externes 22 du boîtier 20.

Les moyens de fixation (non représentés) permettent quant à eux de fixer rigidement le boîtier 20 au véhicule automobile, dans la planche de bord de ce dernier, sous le pare-brise 100.

Pour permettre aux images générées par le dispositif de génération d'images 30 d'être projetées dans le champ de vision du conducteur, c'est-à-dire à l'extérieur du boîtier 20, ce dernier comporte une fenêtre principale 24 qui est située dans l'une de ses parois externes 22, ici dans sa paroi externe supérieure.

Cette fenêtre principale 24 pourrait être fermée par un écran anti-lumière parasite, mobile ou déformable.

Toutefois, dans les deux modes de réalisation représentés sur les figures, cette fenêtre principale 24 est laissée ouverte en ce sens qu'elle n'est fermée par aucune vitre ou aucun écran.

L'écran anti-lumière parasite 50 (ci-après appelé écran 50) est alors situé à l'intérieur du boîtier 20. En pratique, il ferme entièrement une fenêtre 21 pratiquée dans une cloison intérieure 23 du boîtier 20. Il est ainsi situé sur le chemin du faisceau lumineux émis par le dispositif de génération d'images 30 entre, d'un côté, le dispositif de génération d'images 30, et, de l'autre, le miroir de repliement 41.

Cet écran 50 est de préférence transparent.

Cet écran 50 est distinct de la vitre protectrice équipant éventuellement le dispositif de génération d'images 30. Il est conçu pour protéger le dispositif de génération d'images 30 des objets qui tomberaient dans le boîtier 20 par la fenêtre principale 24 et des poussières et autres particules qui ne manqueront pas de s'introduire dans le boîtier 20.

Dans les deux modes de réalisation représentés sur les figures, la cloison intérieure 23 dans laquelle est située la fenêtre 21 sépare en deux parties distinctes l'espace intérieur délimité par les parois externes 22 du boîtier 20.

L'une des parties de l'espace intérieur, qui est délimitée par la cloison intérieure 23 et une partie des parois externes 22, est appelée chambre d'accueil 25. Elle est fermée de manière hermétique aux poussières par l'écran 50 et loge le dispositif de génération d'images 30, qui s'en trouve donc bien protégé.

Malgré sa position à l'intérieur du boîtier 20, l'écran 50 est encore susceptible de recevoir des rayons lumineux provenant de l'extérieur, et de les réfléchir au risque d'éblouir le conducteur ou de gêner la lisibilité des informations projetées dans le champ de vision du conducteur.

Selon une caractéristique particulièrement avantageuse de l'invention, pour obvier à ce problème, l'afficheur tête-haute 10 est équipé d'un actionneur 60 adapté à déplacer et/ou à déformer l'écran 50.

Ainsi, dans le premier mode de réalisation représenté sur la figure 1, l'écran 50 est monté mobile par rapport au boîtier 20 et il est adapté à être déplacé par l'actionneur 60, tandis que dans le second mode de réalisation représenté sur la figure 2, l'écran 50 est déformable et il est adapté à être déformé par l'actionneur 60.

En déplaçant ou déformant l'écran 50, l'actionneur 60 est conçu pour dévier les rayons lumineux qui se réfléchissent sur l'écran 50.

Afin de les dévier de façon à ce qu'ils n'éblouissent pas le conducteur, il est nécessaire de connaître la direction des rayons lumineux incidents (ceux qui arrivent sur l'écran 50). Pour cela, l'afficheur tête-haute 10 est équipé, dans chacun des deux modes de réalisation représentés, d'un capteur 70.

Dans le mode de réalisation représenté sur la figure 1, ce capteur 70 est situé sous le miroir de repliement 41. Il reçoit donc la lumière par la fenêtre principale 24.

Dans le mode de réalisation représenté sur la figure 2, ce capteur 70 est situé au-dessus du miroir de repliement 41 et il est inséré dans l'une des parois externes 22 du boîtier 20.

Un exemple de réalisation de ce capteur 70, d'architecture très simple et de coût de revient réduit, est représenté sur la figure 3.

Comme le montre cette figure, le capteur 70 comporte un socle 71 qui délimite trois conduits inclinés dans trois directions D1, D2, D3 différentes. L'inclinaison de ces conduits pourra être ajustée de la manière souhaitée.

Ici, ces trois conduits débouchent sur un même côté du socle 71, par une même ouverture pratiquée dans le socle 71. Ces trois conduits sont en revanche tous fermés du côté opposé.

Il est alors prévu, au fond de chaque conduit, une cellule photoélectrique 72, 73, 74. Grâce à cette configuration, chaque cellule photoélectrique 72, 73, 74 est adaptée à mesurer une intensité lumineuse de la lumière arrivant sur le capteur 70 selon l'une des trois directions D1, D2, D3.

Le capteur 70 est connecté au calculateur 80, de façon à ce que ce dernier puisse recevoir les intensités lumineuses mesurées par les trois cellules. Ainsi le calculateur 80 peut-il estimer la direction dans laquelle se trouve le soleil par rapport au capteur 70.

On peut maintenant décrire plus en détail, tout d'abord en référence à la figure 1 puis en référence à la figure 2, la manière selon laquelle les informations délivrées par le capteur 70 peuvent être utilisées par le calculateur 80 pour piloter l'actionneur 60.

Dans le premier mode de réalisation représenté sur la figure 1, l'écran 50 est formé par une vitre transparente, rigide et plane, et il est monté sur le boîtier 20 avec une mobilité de basculement, c'est-à-dire de rotation autour d'un axe.

En pratique, cet axe est situé horizontalement (lorsque le véhicule roule sur une route horizontale). L'écran 50, qui est ici de forme rectangulaire, est alors articulé par son bord supérieur sur le boîtier 20 de manière à pouvoir basculer entre deux positions angulaires extrêmes.

Pour bien définir ces positions angulaires, on peut considérer la direction moyenne du flux lumineux émis par le dispositif de génération de lumière 30 (qui est orthogonale à l'écran d'affichage 31).

L'écran 50 est ici adapté à être incliné par rapport à cette direction moyenne d'un angle pouvant varier entre 80 et 100 degrés.

Dans l'une des positions angulaires extrêmes, l'écran 50 est donc tourné vers le haut du miroir de repliement 41, de manière à réfléchir les rayons lumineux incidents vers le dessus de ce miroir de repliement 41. Dans l'autre des positions angulaires extrêmes, l'écran 50 est au contraire plutôt tourné vers le bas du miroir de repliement 41, de manière à réfléchir les rayons lumineux incidents vers le dessous de ce miroir de repliement 41.

On considérera ici que le calculateur 80 pilote l'actionneur 60 de telle manière que ce dernier puisse placer l'écran 50 dans chacune de trois positions angulaires stables que sont ces deux positions angulaires extrêmes et une position angulaire centrale (à mi-chemin entre les deux positions angulaires extrêmes).

Ici, il est prévu des butées (non représentées) pour limiter la mobilité de l'écran 50 entre ces deux positions angulaires extrêmes. Il pourra s'agir de butée situées de part et d'autre de l'écran 50 ou de butées prévues dans l'actionneur 60 lui-même.

L'actionneur 60 permettant de faire pivoter l'écran 50 pourra être d'un type quelconque. A titre d'exemple, il pourra s'agir d'un moteur pas-à-pas.

Comme cela a été exposé ci-dessus, l'écran 50 est conçu pour protéger le dispositif de génération de lumière 30 des poussières ou de tout objet tombant dans le boîtier 20.

Pour cela, le bord de la fenêtre 21 dans laquelle est situé l'écran 50 présente une forme telle qu'il est adapté à assurer la jonction entre le boîtier 20 et l'écran 50, sur toute la course de l'écran 50.

Les côtés latéraux du bord de la fenêtre 21 sont alors ici plats pour que les bords latéraux de l'écran 50 puissent coulisser contre eux. Le côté inférieur du bord de la fenêtre 21 est en revanche incurvé autour de l'axe de bascule de l'écran 50, de manière que le bord inférieur de l'écran 50 puisse coulisser contre lui.

Le calculateur 80 est adapté à commander l'actionneur 60 en fonction des signaux reçus du capteur 70. Comme cela a été exposé ci-dessus, le calculateur 80 est plus précisément ici prévu pour piloter l'écran 50 dans l'une ou l'autre de trois positions angulaires (séparées deux à deux de 10°).

Ainsi, à titre d'exemple, chacune de ces trois positions angulaires pourra être associée à l'une des cellules photoélectriques 72, 73, 74 du capteur 70, de sorte que le calculateur 80 pilote l'écran 50 dans la position angulaire associée à la cellule photoélectrique qui détecte la plus grande intensité lumineuse.

Dans le second mode de réalisation représenté sur la figure 2, l'écran 50 est formé par une plaque transparente flexible ou par un film plastique transparent.

Il est conçu, lorsqu'il n'est pas contraint, pour présenter une forme plane. Au contraire, lorsqu'il est contraint par l'actionneur 60, l'écran 50 est adapté à fléchir de manière à présenter une forme incurvée autour d'un axe (en pratique un axe horizontal).

Ici, lorsqu'il n'est pas contraint, l'écran 50 présente une forme rectangulaire. Il est fixé au boîtier 20 uniquement par son bord supérieur.

Il est connecté par son bord inférieur à l'actionneur 60. Ici encore, cet actionneur 60 pourra se présenter sous diverses formes. A titre d'exemple, il pourra s'agir d'un servomoteur adapté à repousser le bord inférieur de l'écran 50 vers le bord supérieur de cet écran, pour l'incurver.

L'écran 50 pourra être incurvé de manière que chaque faisceau lumineux qui arrive sur l'écran puisse être réfléchi dans une pluralité de directions de l'espace. De cette façon, la partie du faisceau lumineux réfléchi en direction du conducteur présentera une intensité si faible qu'elle ne provoquera aucune gêne pour la conduite du véhicule.

Au contraire, l'écran 50 pourra être laissé plat de manière que chaque faisceau lumineux qui arrive sur l'écran soit réfléchi dans une direction particulière. Dans cette configuration, l'écran 50 sera incliné vers le bas par rapport à la direction moyenne du flux lumineux émis par le dispositif de génération de lumière 30, pour réfléchir majoritairement ce faisceau lumineux vers le dessous du miroir de repliement 41.

Ici, le rayon de courbure de l'écran 50 est piloté pour varier entre une valeur infinie (lorsque l'écran est plat) et une valeur extrême préférentiellement inférieure à 20 millimètres (ici égale à 14 millimètres).

On considérera dans la suite de cet exposé que l'écran 50 sera ici piloté uniquement dans l'une ou l'autre de ces deux configurations (écran plat ou écran courbé avec un rayon de courbure de 14 millimètres).

Comme cela a été exposé ci-dessus, l'écran 50 est conçu pour protéger le dispositif de génération de lumière 30 des poussières ou de tout objet tombant dans le boîtier 20.

Pour cela, le bord de la fenêtre 21 dans laquelle est situé l'écran 50 présente une interface adaptée à assurer la jonction entre le boîtier 20 et l'écran 50, sur toute la course de l'actionneur 60.

Ici, les côtés latéraux du bord de la fenêtre 21 sont alors plats, tandis que le côté inférieur du bord de la fenêtre 21 présente un soufflet raccordé au bord inférieur de l'écran 50.

Le calculateur 80 est adapté à commander l'actionneur 60 en fonction des signaux reçus du capteur 70.

Pour cela, à titre d'exemple, le calculateur 80 peut être conçu pour piloter l'écran 50 dans une configuration plane lorsque l'intensité lumineuse mesurée par l'une des cellules photoélectriques du capteur est très supérieure à celles mesurées par les autres cellules photoélectriques du capteur 70 (par exemple supérieur de plus de 20 %). En effet, dans ce cas, on estime que la lumière du soleil arrive dans une direction bien précise sur l'écran 50, si bien qu'il est jugé préférable de la réfléchir en un point particulier, sous le miroir de repliement 41.

Au contraire, si les intensités lumineuses mesurées par les trois cellules photoélectriques du capteur sont sensiblement les mêmes (à 20% près), le calculateur 80 peut être conçu pour piloter l'écran 50 dans une configuration incurvée. En effet, dans ce cas, on estime que la lumière du soleil arrive de manière diffuse sur le capteur, par exemple parce que le soleil est caché par les nuages, si bien qu'il est jugé préférable de réfléchir la lumière dans une pluralité de directions.

Dans les deux modes de réalisation représentés sur les figures 1 et 2, l'écran 50 est situé à une distance réduite mais non nulle du dispositif de génération d'images 30.

Il est plus précisément situé en dehors de la profondeur de champ définie par le dispositif de génération d'images 30 et le système de projection 40. De cette manière, si des poussières ou autres particules venaient à se déposer sur cet écran 50, ces dernières ne seraient pas visibles sur l'image virtuelle Img projetée dans le champ de vision du conducteur.

Par ailleurs, l'écran 50 est situé à une distance du dispositif de génération d'images 30 qui est inférieure à 10 millimètres. De cette manière, l'écran 50 est situé au plus loin de la fenêtre principale 24 (cet éloignement étant mesuré non pas en valeur absolue, mais plutôt en considérant le trajet parcouru par la lumière via le miroir de repliement 41). La quantité de lumières parasites atteignant l'écran 50 et étant alors susceptibles de venir perturber la lecture de l'image virtuelle Img par le conducteur s'en trouve ainsi réduite.

Un risque courant dans les afficheurs tête-haute est que la lumière du soleil entre dans le boîtier 20 et provoque une surchauffe du dispositif de génération d'images 30.

On comprend que grâce à l'invention, l'écran 50 est en mesure d'atténuer sensiblement cet inconvénient.

On peut toutefois prévoir de l'atténuer davantage en plaçant un filtre polariseur dans le boîtier 20. Il s'agira ici d'un filtre comportant une polarisation rectiligne. Le filtre polariseur sera orienté par rapport au dispositif de génération d'images 30 de manière à transmettre un maximum de la lumière issue de ce dernier.

En pratique, dans la variante de la figure 1, l'écran d'affichage 31 est de type TFT si bien qu'il est équipé de son propre filtre polariseur. Alors, le filtre polariseur susmentionné sera orienté par rapport au filtre polariseur de l'écran d'affichage 31 de manière que leurs directions de polarisation soient parallèles. Ainsi, le taux de transmission par le filtre polariseur de la lumière issue de l'écran d'affichage 31 sera optimum (par exemple de l'ordre de 80 à 90%).

On peut envisager deux modes de réalisation de ce filtre polariseur.

Dans un premier mode de réalisation, le filtre polariseur sera porté par l'écran 50.

Ce premier mode de réalisation n'est toutefois pas le préféré dans la mesure où la déformation ou l'inclinaison de l'écran 50 aura une influence non seulement sur le taux de transmission par le filtre de la lumière émise par l'écran d'affichage 31, mais également sur le taux d'absorption par le filtre de la lumière du soleil.

Dans un second mode de réalisation, qui sera préféré, le filtre polariseur sera situé sur une vitre placée soit dans la fenêtre principale 24 du boîtier 20, soit entre cette fenêtre principale 24 et le miroir de repliement 41, soit entre ce miroir de repliement 41 et l'écran 50. Cette vitre étant fixe, sa direction de polarisation ne variera pas ce qui assura au filtre polariseur des performances toujours optimales.

On notera que dans ce second mode, il faudra prendre soin de donner à la vitre une orientation et une forme telle qu'elle ne renvoie pas (ou le moins possible) la lumière du soleil vers l'utilisateur.

On notera également que dans ce second mode, l'écran 50 n'aura plus de fonction de protection du dispositif de génération d'images 30 vis-à-vis des objets entrant dans le boîtier 20. Ce sera en effet ladite vitre qui aura cette fonction. L'écran 50 conservera en revanche toujours sa fonction de protection contre la lumière parasite issue du soleil.

Encore en variante, on pourrait prévoir que ladite vitre soit dépourvue de filtre polariseur et qu'elle assure donc seulement une fonction de protection du dispositif de génération d'images 30 vis-à-vis des objets entrant dans le boîtier 20.

La présente invention n'est nullement limitée aux modes de réalisation décrits et représentés, mais l'homme du métier saura y apporter toute variante conforme à son esprit.

A titre d'exemple, le calculateur 80 pourrait être conçu pour piloter le déplacement ou la déformation de l'écran 50 en fonction de l'heure uniquement, en se basant sur le principe selon lequel la hauteur du soleil varie en fonction de l'heure.

En variante, le déplacement ou la déformation de l'écran 50 pourrait être piloté en fonction d'autres données, par exemple en fonction de messages météorologiques reçus (le taux de diffusion de la lumière du soleil variant en fonction de l'ensoleillement), ou en fonction de la position géolocalisée (GPS) du véhicule et de l'heure.

Selon une autre variante de réalisation de l'invention, on aurait pu monter l'écran (50) et son actionneur (60) non pas à l'intérieur du boîtier 20, mais au travers de la fenêtre principale (24) du boîtier.

Selon une autre variante, on aurait pu prévoir d'associer au dispositif de génération d'images 30 de la figure 1 un écran 50 et un actionneur 60 du type de celui représenté sur la figure 2, ou inversement.

Enfin, selon une autre variante de l'invention, on aurait pu prévoir que l'actionneur soit en mesure de simultanément déplacer (en rotation ou en translation) et déformer l'écran 50.

## Revendications

1. Afficheur tête-haute (10) pour véhicule automobile, qui comporte :
- un boîtier (20),
- un dispositif de génération d'images (30) logé à l'intérieur du boîtier (20), et
- un système de projection (40) adapté à dévier le faisceau lumineux émis par le dispositif de génération d'images (30) pour projeter lesdites images dans le champ de vision du conducteur du véhicule automobile, et
**caractérisé en ce qu'**il comporte également :
- un écran anti-lumière parasite (50), qui est situé sur le chemin dudit faisceau lumineux et qui ferme une fenêtre (21) pratiquée dans le boîtier (20), et
- un actionneur (60) pour déplacer et/ou déformer ledit écran anti-lumière parasite (50), ledit actionneur (60) étant :
- conçu pour déplacer l'écran anti-lumière parasite (50) sur une course prédéterminée, le bord de la fenêtre (21) présentant une forme telle qu'il est adapté à assurer la jonction entre le boîtier (20) et l'écran anti-lumière parasite (50) sur toute la course de l'écran anti-lumière parasite (50) et/ou
- adapté à déformer l'écran anti-lumière parasite (50), étant prévu sur le bord de la fenêtre (21) une interface permettant d'assurer la jonction entre le boîtier (20) et l'écran anti-lumière parasite (50) quelle que soit l'amplitude de déformation de l'écran anti-lumière parasite (50)..

2. Afficheur tête-haute (10) selon la revendication précédente, dans lequel il est prévu un capteur (70) pour acquérir une donnée relative à la position du soleil par rapport au véhicule automobile, et dans lequel ledit actionneur (60) est piloté par un calculateur (80) en fonction de la donnée acquise.

3. Afficheur tête-haute (10) selon l'une des revendications précédentes, dans lequel il est prévu un capteur (70) pour acquérir une donnée relative au taux de diffusion de la lumière du soleil perçue depuis le véhicule automobile, et dans lequel ledit actionneur (60) est piloté par un calculateur (80) en fonction de la donnée acquise.

4. Afficheur tête-haute (10) selon l'une des revendications précédentes, dans lequel l'écran anti-lumière parasite (50) est mobile en basculement par rapport au boîtier (20).

5. Afficheur tête-haute (10) selon la revendication précédente, dans lequel il est prévu des butées pour limiter la mobilité de l'écran anti-lumière parasite (50) entre deux positions angulaires extrêmes qui sont inclinées l'une par rapport à l'autre d'un angle inférieur à 30 degrés, préférentiellement égal à 20 degrés.

6. Afficheur tête-haute (10) selon l'une des revendications précédentes, dans lequel l'écran anti-lumière parasite (50) est adapté à se déformer en flexion entre une configuration plane et une configuration courbée extrême.

7. Afficheur tête-haute (10) selon la revendication précédente, dans lequel, en configuration courbée extrême, l'écran anti-lumière parasite (50) présente un rayon de courbure inférieur à 20 millimètres, préférentiellement égal à 14 millimètres.

8. Afficheur tête-haute (10) selon l'une des revendications précédentes, dans lequel le système de projection (40) comprend au moins un miroir de repliement (41) adapté à dévier le faisceau lumineux émis par le dispositif de génération d'images (30) et dans lequel ledit écran anti-lumière parasite (50) est situé le long du chemin dudit faisceau lumineux entre, d'un côté, le dispositif de génération d'images (30), et, de l'autre, chaque miroir de repliement (41).

9. Afficheur tête-haute (10) selon l'une des revendications 1 à 8, dans lequel le boîtier (20) présente une fenêtre principale (24) pour le passage dudit faisceau lumineux vers l'extérieur du boîtier (20) et dans lequel il est prévu dans la fenêtre principale (24) ou entre la fenêtre principale (24) et ledit écran anti-lumière parasite (50) un filtre polariseur fixe et/ou une vitre de protection fixe.

10. Afficheur tête-haute (10) selon l'une des revendications 1 à 8, dans lequel le boîtier (20) présente une fenêtre principale (24) pour le passage dudit faisceau lumineux vers l'extérieur du boîtier (20) qui est ouverte, et dans lequel ledit écran anti-lumière parasite (50) assure une fonction de protection du dispositif de génération d'images (30) contre les objets entrant dans le boîtier (20) par la fenêtre principale (24).

## Patentansprüche

1. Head-up-Display (10) für ein Kraftfahrzeug, das aufweist:
- ein Gehäuse (20),
- eine Bilderzeugungsvorrichtung (30), die im Inneren des Gehäuses (20) untergebracht ist, und
- ein Projektionssystem (40), das geeignet ist, den von der Bilderzeugungsvorrichtung (30) emittierten Lichtstrahl umzulenken, um die Bilder in das Sichtfeld des Fahrers des Kraftfahrzeugs zu projizieren, und
**dadurch gekennzeichnet, dass** es ebenfalls aufweist:
- eine Streulichtabschirmung (50), die sich auf dem Weg des Lichtstrahls befindet und ein im Gehäuse (20) hergestelltes Fenster (21) verschließt, und
- einen Stellantrieb (60), um die Streulichtabschirmung (50) zu verschieben und/oder zu verformen, wobei der Stellantrieb (60):
- konzipiert ist, um die Streulichtabschirmung (50) auf einem vorbestimmten Weg zu verschieben, wobei der Rand des Fensters (21) eine solche Form hat, dass er geeignet ist, die Verbindung zwischen dem Gehäuse (20) und der Streulichtabschirmung (50) über den ganzen Weg der Streulichtabschirmung (50) zu gewährleisten, und/oder
- geeignet ist, die Streulichtabschirmung (50) zu verformen, wobei auf dem Rand des Fensters (21) eine Verbindungsfläche vorgesehen ist, die es ermöglicht, die Verbindung zwischen dem Gehäuse (20) und der Streulichtabschirmung (50) unabhängig von der Verformungsamplitude der Streulichtabschirmung (50) zu gewährleisten.

2. Head-up-Display (10) nach dem vorhergehenden Anspruch, wobei ein Sensor (70) vorgesehen ist, um einen Datenwert bezüglich der Stellung der Sonne bezüglich des Kraftfahrzeugs zu erfassen, und wobei der Stellantrieb (60) abhängig vom erfassten Datenwert von einem Rechner (80) gesteuert wird.

3. Head-up-Display (10) nach einem der vorhergehenden Ansprüche, wobei ein Sensor (70) vorgesehen ist, um einen Datenwert bezüglich des Streuungsgrads des Lichts der Sonne zu erfassen, das vom Kraftfahrzeug aus wahrgenommen wird, und wobei der Stellantrieb (60) abhängig vom erfassten Datenwert von einem Rechner (80) gesteuert wird.

4. Head-up-Display (10) nach einem der vorhergehenden Ansprüche, wobei die Streulichtabschirmung (50) bezüglich des Gehäuses (20) kippbeweglich ist.

5. Head-up-Display (10) nach dem vorhergehenden Anspruch, wobei Anschläge vorgesehen sind, um die Beweglichkeit der Streulichtabschirmung (50) zwischen zwei Endwinkelstellungen zu begrenzen, die zueinander um einen Winkel von weniger als 30 Grad, vorzugsweise gleich 20 Grad, geneigt sind.

6. Head-up-Display (10) nach einem der vorhergehenden Ansprüche, wobei die Streulichtabschirmung (50) geeignet ist, sich zwischen einer ebenen Konfiguration und einer gekrümmten Endkonfiguration zu verbiegen.

7. Head-up-Display (10) nach dem vorhergehenden Anspruch, wobei die Streulichtabschirmung (50) in der gekrümmten Endstellung einen Krümmungsradius von weniger als 20 Millimeter, vorzugsweise gleich 14 Millimeter, aufweist.

8. Head-up-Display (10) nach einem der vorhergehenden Ansprüche, wobei das Projektionssystem (40) mindestens einen Umlenkspiegel (41) enthält, der geeignet ist, den von der Bilderzeugungsvorrichtung (30) emittierten Lichtstrahl umzulenken, und wobei die Streulichtabschirmung (50) sich entlang des Wegs des Lichtstrahls zwischen einerseits der Bilderzeugungsvorrichtung (30) und andererseits jedem Umlenkspiegel (41) befindet.

9. Head-up-Display (10) nach einem der Ansprüche 1 bis 8, wobei das Gehäuse (20) ein Hauptfenster (24) für den Durchgang des Lichtstrahls nach außerhalb des Gehäuses (20) aufweist, und wobei im Hauptfenster (24) oder zwischen dem Hauptfenster (24) und der Streulichtabschirmung (50) ein ortsfester Polarisationsfilter und/oder eine ortsfeste Schutzscheibe vorgesehen ist.

10. Head-up-Display (10) nach einem der Ansprüche 1 bis 8, wobei das Gehäuse (20) ein Hauptfenster (24) für den Durchgang des Lichtstrahls nach außerhalb des Gehäuses (20) aufweist, das offen ist, und wobei die Streulichtabschirmung (50) eine Schutzfunktion der Bilderzeugungsvorrichtung (30) gegen die durch das Hauptfenster (24) in das Gehäuse (20) eindringenden Gegenstände gewährleistet.

## Claims

1. Head-up display (10) for a motor vehicle, which comprises:
- a housing (20),
- an image generation device (30) housed inside the housing (20), and
- a projection system (40) suitable for deflecting the light beam emitted by the image generation device (30) to project said images into the field of view of the driver of the motor vehicle, and **characterized in that** it also comprises:
- an anti-flare screen (50), which is situated on the path of said light beam and which closes a window (21) formed in the housing (20), and
- an actuator (60) for displacing and/or distorting said anti-flare screen (50), said actuator (60) being:
- designed to displace the anti-flare screen (50) over a predetermined travel, the edge of the window (21) having a form such that it is suitable for ensuring the join between the housing (20) and the anti-flare screen (50) over the entire travel of the anti-flare screen (50) and/or
- suitable for distorting the anti-flare screen (50), being provided on the edge of the window (20) with an interface making it possible to ensure the join between the housing (20) and the anti-flare screen (50) whatever the scale of distortion of the anti-flare screen (50).

2. Head-up display (10) according to the preceding claim, wherein a sensor (70) is provided to acquire a datum relating to a position of the sun with respect to the motor vehicle, and wherein said actuator (60) is driven by a computer (80) as a function of the acquired datum.

3. Head-up display (10) according to one of the preceding claims, wherein a sensor (70) is provided to acquire a datum relating to the rate of diffusion of the light from the sun perceived from the motor vehicle, and wherein said actuator (60) is driven by a computer (80) as a function of the acquired datum.

4. Head-up display (10) according to one of the preceding claims, wherein the anti-flare screen (50) can move by tilting with respect to the housing (20).

5. Head-up display (10) according to the preceding claim, wherein abutments are provided to limit the mobility of the anti-flare screen (50) between two extreme angular positions which are inclined with respect to one another by an angle less than 30°, preferentially equal to 20°.

6. Head-up display (10) according to one of the preceding claims, wherein the anti-flare screen (50) is adapted to be distorted by bending between a flat configuration and an extreme curved configuration.

7. Head-up display (10) according to the preceding claim, wherein, in extreme curved configuration, the anti-flare screen (50) has a radius of curvature less than 20 millimetres, preferentially equal to 14 millimetres.

8. Head-up display (10) according to one of the preceding claims, wherein the projection system (40) comprises at least one folding mirror (41) suitable for deflecting the light beam emitted by the image generation device (30) and wherein said anti-flare screen (50) is situated along the path of said light beam between, on one side, the image generation device (30), and, on the other side, each folding mirror (41).

9. Head-up display (10) according to one of Claims 1 to 8, wherein the housing (20) has a main window (24) for the passage of said light beam out of the housing (20) and wherein there is provided, in the main window (24) or between the main window (24) and said anti-flare screen (50), a fixed polarizing filter and/or a fixed protection glass.

10. Head-up display (10) according to one of Claims 1 to 8, wherein the housing (20) has a main window (24) for the passage of said light beam out of the housing (20) which is open, and wherein said anti-flare screen (50) ensure a function of protection of the image generation device (30) against the objects entering into the housing (20) through the main window (24).
